Europäisches Patentamt

European Patent Office

Office européen des brevets

(19)

(11) Veröffentlichungsnummer: **0 209 801**
**B1**

(12) **EUROPÄISCHE PATENTSCHRIFT**

(45) Veröffentlichungstag der Patentschrift:
14.06.89

(21) Anmeldenummer: 86109438.1

(22) Anmeldetag: 10.07.86

(51) Int. Cl.⁴: **H04N 1/028**

(54) Handgerät zum rasterlinienweisen Abtasten.

(30) Priorität: 17.07.85 DE 3525450

(43) Veröffentlichungstag der Anmeldung:
28.01.87 Patentblatt 87/5

(45) Bekanntmachung des Hinweises auf die Patenterteilung:
14.06.89 Patentblatt 89/24

(84) Benannte Vertragsstaaten:
AT BE DE FR GB IT SE

(56) Entgegenhaltungen:
DE-A- 1 762 965
DE-A- 3 422 120
US-A- 3 739 095

XEROX DISCLOSURE JOURNAL, Band 9, Nr. 2,
März/April 1984 Seiten 163-164

(73) Patentinhaber: Standard Elektrik Lorenz
Aktiengesellschaft, Lorenzstrasse 10,
D-7000 Stuttgart 40(DE)

(72) Erfinder: Andrich, Wolfgang, Dr., Im Brünnlislehen 30,
D-7530 Pforzheim(DE)
Erfinder: Schilling, Helmut W., Im Lachenwälde 13b,
D-7530 Pforzheim(DE)

(74) Vertreter: Graf, Georg Hugo, Dipl.-Ing. et al, Standard
Elektrik Lorenz AG Patent- und Lizenzwesen
Postfach 30 09 29, D-7000 Stuttgart 30(DE)

## Beschreibung

Die Erfindung geht von einem Handgerät gemäß dem Oberbegriff des Anspruches 1 aus.

Ein derartiges Handgerät ist durch die EP-Anmeldung EP-A2-0 146 472 bekannt. Das Gerät hat etwa Handbreite und damit eine relativ schmale Abtastbreite. Ein Rollenpaar bildet das Laufwerk. Ein halbdurchlässiger Spiegel dient als Anzeigevorrichtung. Die Abtastbreite ist konstant. Der halbdurchlässige Spiegel erfordert eine sehr hohe Lichtleistung der Beleuchtungseinrichtung, da nur etwa die Hälfte des von der Vorlage reflektierten Lichtes auf den opto-elektronischen Wandler gelangt.

Die Aufgabe der Erfindung besteht darin, ein Handgerät zur rasterlinienweisen Abtastung einer Vorlage zu schaffen, bei dem die Abtastbreite einstellbar ist.

Diese Aufgabe wird durch die im Anspruch 1 angegebenen Merkmale gelöst. Die abhängigen Ansprüche zeigen vorteilhafte Ausgestaltungen des Erfindungsgegenstandes auf.

Die durch die Erfindung erzielt Vorteile bestehen insbesondere darin, daß durch die Flüssigkristallanzeige das von der Abtastoptik aufgenommene Licht ungeteilt auf den opto-elektronischen Wandler gelangt und daß die Anzeigebreite in der Regel breiter ist als die Speicherbreite, die über die Randsteller einstellbar ist. Dadurch ist ein einfaches Ausrichten des Handgerätes auf die Aufzeichnung bzw. bei großformatigen Vorlagen auf den jeweils gewünschten Ausschnitt möglich. In Verbindung mit einer entsprechenden Speicherorganisation ist es möglich, unterschiedlich breite Ausschnitte von einer oder aus mehreren Vorlagen abzutasten und zu kombinieren. Das Laufwerk hat zwei parallele Wellen mit Walzenrädern. Dadurch ist dem Handgerät eine sichere Geradeausführung gegeben.

Anhand eines Ausführungsbeispiel wird die Erfindung in Verbindung mit den Zeichnungen nachfolgend näher erläutert. Es zeigt:

Figur 1 eine aus Handgerät und Steuergerät bestehende Abtasteinrichtung gemäß der Erfindung in perspektivischer Darstellung.

Figur 2 ein Prinzip-Blockschaltbild der Abtasteinrichtung gemäß Figur 1.

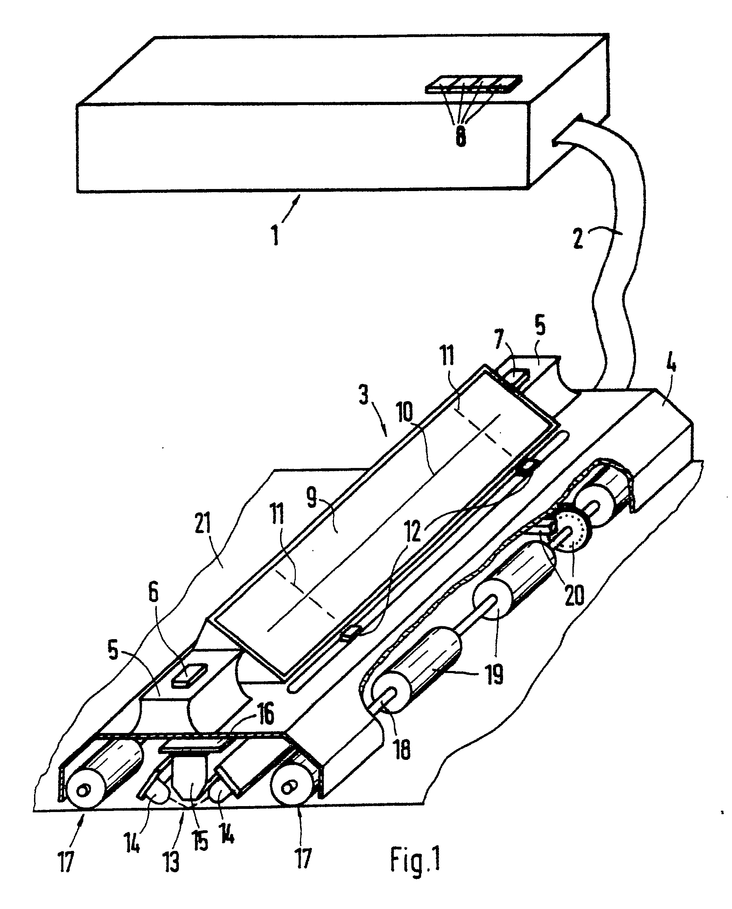

Figur 1 zeigt in Perspektivdarstellung eine Einrichtung zum rasterlinienweisen Abtasten von flachen Vorlagen. Die Einrichtung besteht aus einem Steuergerät 1 und einem Handgerät 3, die über ein flexibles Kabel 2 miteinander verbunden sind. Die Kabellänge ist so bemessen, daß das Handgerät 3 die notwendige Bewegungsfreiheit hat, um es auf abzutastenden Vorlagen 21 unterschiedlichen Formats frei bewegen zu können. Das Steuergerät 1 enthält im wesentlichen eine Stromversorgung und eine Steuer- und Speicherlogik zum Betrieb des Handgerätes 3. Über Funktionsschalter 8 können verschiedene Betriebszustände gewählt werden.

Das Handgerät 3 hat ein flaches nach unten offenes Gehäuse 4 mit einem zweiachsigen Laufwerk 17, wie die Gehäuseschnitte erkennen lassen. Im Raum zwischen dem Laufwerk ist eine Abtastoptik 13 angeordnet, die sich achsparallel über die Länge des Gehäuses 4 erstreckt. Die beispielsweise auf die Breite des A4-Formats ausgelegte Abtastoptik 13 bestimmt die Länge des Gehäuses 4. Das Gehäuse 4 hat auf der Oberseite über seiner Schwerelinie endseitig je einen Griffknopf 5. Zwischen diesen ist eine z.B. aus Flüssigkristallen bestehende Anzeigevorrichtung 9 schräg zum Betrachter hin angeordnet. In der Gehäuseoberseite sind längs der Anzeigevorrichtung zwei Randsteller 12 verschiebbar angeordnet.

Das Laufwerk besteht zwei im Gehäuse 4 frei drehbar gelagerten Wellen 18, auf denen mehrere Walzenräder 19 fest angeordnet sind. Letztere haben als Lauffläche einen rutschfesten Belag. Die Wellen 18 sind untereinander in nicht sichtbarer Weise drehgekoppelt. Auf einer der Wellen 18 ist das drehbare Teil eines an sich bekannten Positionsgebers 20 befestigt, wie er z.B. unter der Typenbezeichnung "HEDS/5000/G11" von der Firma Hewlett Packard G.m.b.H. Herrenbergerstr. 130, 7030 Böblingen angeboten wird. Die Walzenräder 19 und der Positionsgeber 20 sind so aufeinander abgestimmt, daß der Positionsgeber beim Bewegen des Handgerätes 3 über die Vorlage 21 in Abtastrichtung bei jeder inkrementalen Drehung der Walzenräder 19 um einen Rasterlinienabstand ein Signal abgibt.

Die Abtastoptik 13 besteht aus einer Beleuchtungseinrichtung 14, die zwei Reihen eng benachbarter Leuchtdioden umfaßt, einer eindimensionalen, aus Stablinsen bestehenden Optik 15 z.B. entsprechend der DE-AS 19 42 601, und einem opto-elektronischen Wandler 16 mit einer rasterlinienbreiten Sensorzeile und zugehöriger Treiberschaltung. Eine derartige Abtastoptik ist durch das Datenblatt No. TE-CIPS 216 MS1 1985-01-08 der Firma Toshiba Corp., Japan in Verbindung mit dem Contact Image Sensor CIPS 200 A 01 C der selben Firma bekannt.

Die Griffknöpfe 5 sind so geformt, daß das Handgerät 3 beidhändig hochgehoben, auf die abzutastende Vorlage aufgesetzt und ausgerichtet und in Abtastrichtung hin- und herbewegt werden kann. In die Deckfläche der Griffknöpfe 5 sind Tastschalter 6 bzw. 7 eingelassen. Über diese Tastschalter kann in nachfolgend noch näher beschriebener Weise die Anzeige und Einspeicherung des mit dem Handgerät 3 überfahrenen Zei lenbereichs der Vorlage 21 gewählt werden.

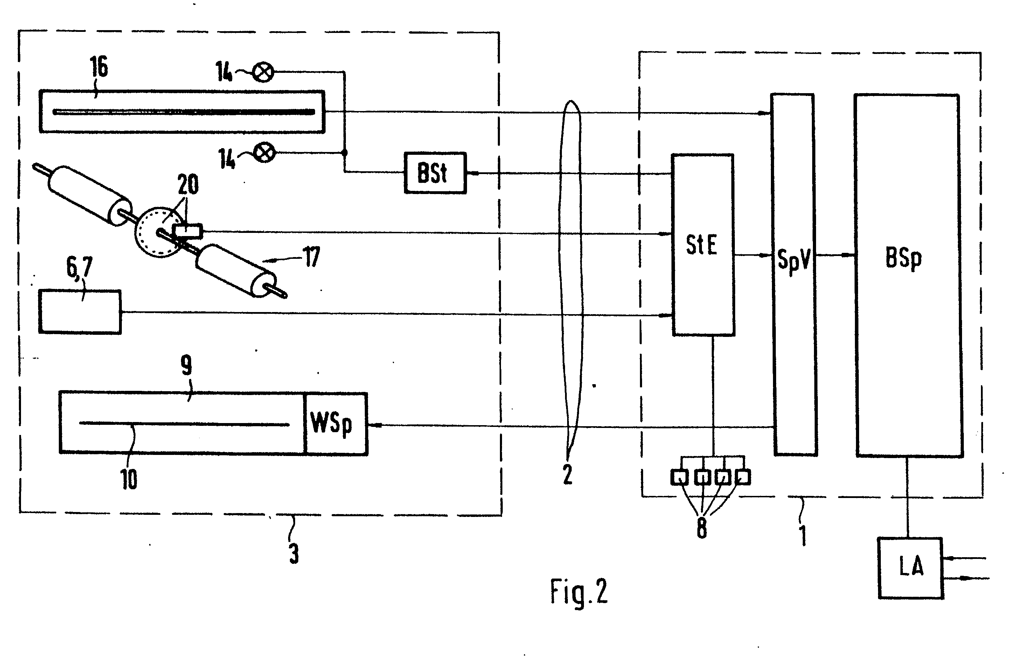

Die Anzeigevorrichtung 9 hat einen Bildwiederholspeicher WSp (Figur 2) mit Scroll-Funktion, so daß der beim Bewegen des Handgerätes 3 von der Abtastoptik 13 überfahrene Zeilenbereich der Vorlage 21 mitwandernd auf der Anzeigefläche der Vorrichtung 9 wiedergegeben wird. Auf der Anzeigefläche ist vorzugsweise in der Mitte eine waagerechte Linie 10 angeordnet. Diese zeigt jeweils den Rasterlinienbereich der Vorlage 21 an, über dem sich die Stablinsenoptik 15 momentan befindet. Die Anzeigevorrichtung 9 gibt in der Horizontalen die volle Breite der Abtastung wieder, während in der Vertikalen in Verbindung mit dem Scroll-Effekt nur ein mitwandernder Ausschnitt der in Längsrichtung überfahrenen Vorlage 21 wiedergegeben wird. Die Position der Randsteller 12 wird auf der Anzeigefläche der

Vorrichtung 9 durch vertikale Linien 11 markiert. Durch die Randsteller 12 wird der Bereich bestimmt, der innerhalb der Gesamtabtastung ausgewertet d.h. eingespeichert werden soll. Dadurch ist es möglich, aus der Gesamtbreite der Abtastung frei wählbare Teilbereiche auszuwählen.

Figur 2 zeigt ein Prinzip-Blockschaltbild der Abtasteinrichtung gemäß Figur 1. Die Steuer- und Speicherlogik des Steuergerätes 1 enthält eine Steuereinheit StE, die über die Funktionsschalter 8 auf verschiedene Betriebszustände einstellbar ist, eine Speicherverwaltung SpV und einen Bildpunktspeicher BSp. Dieser ist über eine Leitungsanpassung LA, die z.B. mit einer Wähleinrichtung und einer Fehlererkennungseinrichtung kombiniert ist, an eine Übertragungsleitung angeschlossen, so daß ein externer Sende- und Empfangsbetrieb möglich ist.

Wie Figur 2 zeigt, sind der opto-elektronische Wandler 16 und die Anzeigevorrichtung 9 des Handgerätes 3 mit der Speicherverwaltung SpV des Steuergerätes 1 verbunden, während der Taktgeber 20 und die Tastschalter 6 und 7 mit der Steuereinheit StE verbunden sind. Die Beleuchtungseinrichtung 14 der Abtastoptik wird durch eine Beleuchtungssteuerung BSt geregelt, die ihrerseits mit der Steuereinheit StE verbunden ist.

Anhand der Figur 1 und 2 wird nachfolgend die Funktionsweise der vorbeschriebenen Abtasteinrichtung, insbesondere die des Handgerätes 3 erläutert. Die relativ wenig Platz beanspruchende Abtasteinrichtung kann seitlich am Arbeitsplatz angeordnet sein. Für die abzutastenden Vorlagen ist eine Unterlage mit rutschfester Oberfläche zu verwenden, die gleichzeitig Arbeitsunterlage sein kann. Zum Abtasten einer auf der Unterlage liegenden Vorlage 21 wird das Handgerät 3 aufgesetzt, nachdem das Steuergerät 1 und damit auch das Handgerät 3 über einen entsprechenden Funktionsschalter 8 in den Betriebszustand versetzt worden ist. In diesem Zustand ist die Beleuchtungseinrichtung 14 der Abtastoptik 13 eingeschaltet und die Zellen der Sensorzelle des opto-elektronischen Wandlers 16 werden zyklisch im Takt der Steuerelektronik StE über die Speicherverwaltung SpV abgefragt. Eine Wiedergabe der durch die Optik abgetasteten Rasterlinien erfolgt jedoch erst, wenn der im linken Griffknopf 5 befindliche Tastschalter 6 betätigt wird. So lange das Handgerät 3 nicht in Abtastrichtung bewegt wird, ist auf dem Anzeigefeld der Vorrichtung 9 entsprechend der Aufzeichnung auf der Vorlage 21 nur eine mehr oder weniger unterbrochene Linie von der Breite einer Rasterlinie zu sehen. Zum Ausrichten des Handgerätes 3 auf z.B. Textzeilen auf der Vorlage 21 ist das Handgerät so weit zu verschieben, daß mindestens eine Textzeile vollständig auf dem Anzeigefeld zu sehen ist. In Verbindung mit der waagerechten Linie 10 auf dem Anzeigefeld kann sodann das Handgerät auf den Vorlagentext ausgerichtet werden.

Mit dem Betätigen des Tastschalters 6 wird über die Steuerelektronik StE ein Betriebszustand eingestellt, der unter Zwischenschaltung der Speicherverwaltung SpV eine Art Kurzschlußbetrieb zwischen dem Wandler 16 und dem Bildwiederholspeicher WSp der Anzeigevorrichtung 9 darstellt. Wie bereits erwähnt, bewirkt die in den Speicher WSp integrierte Scroll-Einrichtung, daß der vom Handgerät 3 überfahrene Zeilenbereich auf der Anzeigefläche der Vorrichtung 9 mitwandert. Die rasterlinienweise Zuordnung der im Takt der Steuerelektronik StE abgefragten Sensorzeile des Wandlers 16 erfolgt durch die vom Positionsgeber 20 während der Bewegung des Handgerätes 3 abgegebenen Signale. Durch die feste Kopplung mit dem Laufwerk 17 erfolgt die Signalgabe wie vorbeschrieben im Rasterlinienabstand. Die Signalgabe ist dabei von der Bewegungsgeschwindigkeit des Handgerätes 3 unabhängig, wodurch ein Handbetrieb möglich ist. Unterschiedliche oder wechselnde Bewegungsgeschwindigkeiten bewirken nur, daß der zeitliche Abstand der Signale variiert. In Abhängigkeit von der zeitlichen Folge der Signale des Positionsgebers 20 wird die Stärke der Beleuchtung der Vorlage 21 durch die Beleuchtungseinrichtung 14 von der Steuerelektronik StE über die Beleuchtungssteuerung BSt geregelt.

Bei gedrücktem Tastschalter 6 kann die einzuspeichernde bzw. zu übertragende Information zuerst einmal über die Anzeigevorrichtung 9 betrachtet werden. Diese Möglichkeit ist vor allem dann von Bedeutung, wenn das Handgerät 3 auf einen bestimmten Abschnitt einer größeren Vorlage 21 auszurichten ist; desgleichen für die Fälle, bei denen zur Verringerung der auszuwertenden Breite gegenüber der Abtastbreite vor der endgültigen Abtastung die Randsteller 12 eingestellt werden müssen.

Das Ausrichten und Verschieben des Handgerätes 3 hat mit beiden Händen über die Griffknöpfe 5 zu erfolgen. Soll nach erfolgter Positionierung des Handgerätes 3 eine Einspeicherung der unter Umständen selektierten Vorlageninformation erfolgen, so ist während des folgenden Überfahrens der Vorlage 21 mit dem Handgerät 3 zusätzlich zur Taste 6 der Tastschalter 7 zu betätigen. Dieses bewirkt, daß die Steuerelektronik StE die Speicherverwaltung SpV veranlaßt, die abgefragten Sensorenwerte in der durch den Positionsgeber 20 bestimmten Rasterlinienzuordnung außer in den Bildwiederholspeicher WSp der Anzeigevorrichtung 9 auch in den Bildpunktspeicher BSp einzugeben.

Nach Betätigen eines speziellen Tastschalters 8 kann der Inhalt des Speichers BSp, z.B. zu Kontrollzwecken, auf dem Anzeigefeld der Vorrichtung 9 sichtbar gemacht werden. In diesem Fall ist die Abtastoptik 13 abgeschaltet. Durch Hin- und Herschieben des Handgerätes 3 können die im Bildpunktspeicher BSp enthaltenen Informationen im Durchlauf betrachtet werden. Auf die gleiche Weise können von außen empfangene, im Bildpunktspeicher BSp abgelegte Informationen über die Anzeigevorrichtung 9 sichtbar gemacht werden, bevor sie z.B. durch ein angeschlossenes Faksimilegerät ausgedruckt werden.

Wie zuvor beschrieben, kann die Breite der Einspeicherung über die Randsteller 12 auf einen Teil der Abtastbreite der Optik 13 beschränkt werden. Durch betätigen eines speziellen Funktionsschalters 8 kann in den Bereich der zuvor nicht benutzten Abtastbreite nachträglich eine z.B. von einer anderen Vorlage 21 stammende Information eingegeben werden, d.h. es lassen sich verschiedene Aufzeichnungen kombinieren. In diesem Fall wird die zuvor eingespeicherte Aufzeichnung über die Anzeigevorrichtung 9 im Scroll-Verfahren wiedergegeben, während im Bereich der nicht belegten Abtastbreite der Optik 13 - begrenzt durch die Randsteller 12 - die Aufzeichnung auf der anderen Vorlage 21 angezeigt wird. Nach der gegenseitigen Ausrichtung wird sodann der neue Teil parallel zum bereits eingespeicherten Teil in den Bildpunktspeicher BSp über das Handgerät 3 eingegeben.

## Patentansprüche

1. Handgerät mit einem Laufwerk, einem Positionsgeber (20), einer aus Beleuchtungseinrichtung (14), Stablinse (15) und opto-elektronischem Wandler (16) als rasterlinienbreite Sensorzeile bestehenden Optik (13) zum Abtasten einer mit der Schriftseite nach oben weisenden flachen Vorlage durch Überfahren, und einer Anzeigevorrichtung (9) zur Wiedergabe des durch die Optik abgetasteten Zeilenbereichs der Vorlage (21), **dadurch gekennzeichnet,** daß die Anzeigevorrichtung (9) zwei Randsteller (12) hat, deren Stellung durch vertikale Linien (11) auf der Anzeigefläche der Anzeige-Vorrichtung (9) angezeigt werden, und daß nur die Information, die sich beim Überfahren der Vorlage mit dem Handgerät (3) zwischen den beiden Randstellern (12) befindet, zur Weiterverarbeitung bereitgestellt wird.

2. Handgerät nach Anspruch 1, dadurch gekennzeichnet, daß die Anzeigefläche der Anzeige-Vorrichtung (9) aus Flüssigkristallen besteht, denen ein Bildwiederholspeicher (WSp) zugeordnet ist und daß Steuermittel vorgesehen sind, die bewirken, daß der Anzeigebereichs beim Bewegen des Handgerätes (3) mitwandert.

3. Handgerät nach den Ansprüchen 1 oder 2, dadurch gekennzeichnet, daß die Anzeigefläche der Anzeige-Vorrichtung (9) schräg zum Betrachter hin angeordnet ist.

4. Handgerät nach den Ansprüche 1 oder 2, dadurch gekennzeichnet, daß auf der Anzeigefläche der Anzeige-Vorrichtung (9) eine waagerechte Linie (10) angeordnet ist, die den Rasterlinienbereich der Vorlage (21) anzeigt, über dem sich die Optik (13) befindet.

5. Handgerät nach Anspruch 1, dadurch gekennzeichnet, daß das Laufwerk (17) zwei parallel zueinander angeordnete Wellen (18) hat, die drehgekoppelt sind, daß auf jeder Welle (18) mehrere Walzenräder (19) fest angeordnet sind und daß auf einer der Wellen (18) das drehbare Teil des Impulsgebers (20) befestigt ist.

6. Handgerät nach Anspruch 5, dadurch gekennzeichnet, daß die Walzenräder (19) einen rutschfesten Belag haben.

7. Handgerät nach einem der vorhergehenden Ansprüche, dadurch gekennzeichnet, daß rechts und links von der Anzeigevorrichtung (9) Griffknöpfe (5) angeordnet sind und daß die Griffknöpfe (5) in der Deckfläche Tastschalter (6, 7) haben.

## Claims

1. Hand-held device comprising a mechanism (17), a position encoder (20), an optical scanner (13) for scanning a flat document (21) having written characters on its upper side by movement over the document, and a display device (9) for displaying the line area being scanned by the optical scanner (13), the latter consisting of an illuminator (14), a rod lens (15), and an optical-to-electric transducer (16) and forming a line-long sensor, characterized in that the display device (9) has two margin stops (12) whose positions are indicated by vertical lines (11) on the display panel of the display device (9), and that only the information which is present between the two margin stops (12) when the hand-held device (3) is moved over the document is made available for further processing.

2. A hand-held device as claimed in claim 1, characterized in that the display panel of the display device (9) contains liquid crystals having a refresh memory (WSp) associated therewith, and that control means are provided which cause the display area to move along with the hand-held device (3).

3. A hand-held device as claimed in claim 1 or 2, characterized in that the display panel of the display device (9) is inclined towards the viewer.

4. A hand-held device as claimed in claim 1 or 2, characterized in that on the display panel of the display device (9), there is a horizontal line (10) which indicates the respective line area of the document (21) above which the optical scanner (13) is located.

5. A hand-held device as claimed in claim 1, characterized in that the mechanism (17) has two parallel, rotatably coupled shafts (18), that several rollers (19) are firmly attached to each shaft (18), and that the rotatable part of the position encoder (20) is attached to one of the shafts (18).

6. A hand-held device as claimed in claim 5, characterized in that the rollers (19) have a slip-resistant coating.

7. A hand-held device as claimed in any one of the preceding claims, characterized in that it has handles (5) on the right and on the left of the display device (9), and that the handles (5) have key switches (6, 7) in their respective upper surfaces.

## Revendications

1. Appareil manuel comprenant un mécanisme, un codeur de déplacement angulaire (20), une optique (13) constituée d'un dispositif d'illumination (14), une lentille en forme de tige (15) et un convertisseur optoélectronique (16) ayant la forme d'une rangée de capteurs de la largeur d'une ligne de balayage, et un dispositif d'affichage (9) pour l'affichage de la surface d'une ligne de document (21) balayée par ladite optique, caractérisé en ce que ledit dispositif d'affichage (9) possède deux butées de marge (12) dont la position est représentée par des lignes verticales (11) sur le panneau d'affichage du dispositif d'affichage (9), et en ce que, lorsque le document est parcouru par l'appareil manuel (3) seule l'information qui se trouve entre les deux butées de marge (12) est prélevée pour traitement ultérieur.

2. Appareil manuel conforme à la revendication 1, caractérisé en ce que le panneau d'affichage du dispositif d'affichage (9) est du type à cristaux liquides, auquel est associée une mémoire de rafraîchissement, et qui comprend des moyens de commande faisant que les limites de l'affichage se déplacent en même temps que l'appareil manuel (3).

3. Appareil manuel conforme à la revendication 1 ou 2, caractérisé en ce que le panneau d'affichage du dispositif d'affichage (9) est incliné par rapport au lecteur.

4. Appareil manuel conforme à la revendication 1 ou 2, caractérisé en ce que, sur le panneau d'affichage du dispositif d'affichage (9), il est prévu une ligne horizontale (10) qui indique la zone de balayage de ligne du document (21) sur laquelle se trouve ladite optique (13).

5. Appareil manuel conforme à la revendication 1, caractérisé en ce que le mécanisme (17) possède deux arbres (18) disposés parallèlement l'un à l'autre, qui sont couplés en rotation, en ce que plusieurs galets (17) sont montés fixes sur chaque arbre et en ce que la partie rotative du capteur de déplacement angulaire (70) est fixée à l'un des arbres.

6. Appareil conforme à la revendication 5, caractérisé en ce que les galets (19) ont un revêtement anti-glissement.

7. Appareil manuel conforme à l'une quelconque des revendications précédentes, caractérisé en ce que des poignées sont disposées à droite et à gauche du dispositif d'affichage (9) et en ce que ces poignées possèdent des touches de commutation (6, 7) sur leurs surfaces supérieures.

Fig.1

Fig.2

EP 0 209 801 B1